Europäisches Patentamt

(19) European Patent Office

Office européen des brevets

(11) Numéro de publication: **0 282 469**
**B1**

(12) FASCICULE DE BREVET EUROPEEN

(45) Date de publication du fascicule du brevet:
17.10.90

(21) Numéro de dépôt: 88870029.1

(22) Date de dépôt: 26.02.88

(51) Int. Cl.⁵: **E04B 7/08**, E04B 7/12,
A01G 9/14, E04B 1/32

(54) Toiture vitrée cintrée.

(30) Priorité: **27.02.87 BE 8700185**

(43) Date de publication de la demande:
**14.09.88 Bulletin 88/37**

(45) Mention de la délivrance du brevet:
**17.10.90 Bulletin 90/42**

(84) Etats contractants désignés:
**AT BE CH DE ES FR GB GR IT LI LU NL**

(56) Documents cités:
**EP-A- 0 041 057**
**EP-A- 0 072 382**
**BE-A- 426 891**
**DE-A- 2 160 241**
**DE-U- 8 601 903**
**FR-A- 951 484**
**FR-A- 2 138 711**
**FR-A- 2 198 515**
**US-A- 2 480 642**
**US-A- 4 173 101**

(73) Titulaire: **Glaceries de Saint-Roch S.A., Rue des Glaces
Nationales, 168, B-5700 Sambreville(BE)**

(72) Inventeur: **Mairlot, Henri, Rue du Bois, 218,
B-6300 Acoz(BE)**

(74) Mandataire: **Plucker, Guy et al, OFFICE
KIRKPATRICK 4 Square de Meeûs,
B-1040 Bruxelles(BE)**

**Description**

L'invention concerne une toiture vitrée cintrée formant voûte continue, un procédé de montage pour celle-ci et également une serre comportant cette toiture.

L'invention s'applique notamment à la confection de verrières de grande luminosité, de sites couverts et de jardins d'hiver. Elle sera décrite en se référant plus spécialement à une application particulière : les serres à grandes chapelles.

La culture en serre est régie, pour certains types de productions agricoles, par des critères véritablement industriels.

La rentabilité de ces cultures tient parfois à une marge bénéficiaire restreinte, aussi le cultivateur doit-il pouvoir optimiser tous les facteurs, un de ces facteurs étant l'ensoleillement.

Les serres traditionnelles sont généralement montées avec des feuilles planes de verre recuit de 4 mm d'épaisseur. La dimension de ces feuilles peut atteindre 1,12 x 1,65 m, ce qui rend leur manipulation malaisée lors du montage.

Malgré la dimension des panneaux, la luminosité à l'intérieur des serres ne dépasse pas 75% de la luminosité extérieure.

On sait que 1% de lumière en moins correspond à une diminution de production de
1,2% pour les légumes,
0,9% pour les fleurs à couper,
0,6% pour les plantes ornementales.

On a donc bien là un intérêt tangible à augmenter la transparence moyenne de la paroi en utilisant des volumes de plus grande envergure, tout en étant les plus légers possible eu égard à leur dura bilité et en réduisant les dimensions des éléments d'ossature qui constituent des surfaces opaques.

Dans d'autres applications, telles que la couverture de sites aménagés, d'aires de délassement, de galeries couvertes, il est important que le matériau de couverture et la superstructure confèrent à l'ensemble une grande luminosité, souvent incompatible, pour des raisons de sécurité, avec les couvertures classiques.

Un autre problème important concerne la résistance aux intempéries. En effet, les caractéristiques mécaniques du matériau de couverture doivent pouvoir y répondre et se maintenir dans le temps.

On sait qu'un traitement de trempe (thermique ou chimique) du verre établit, d'une part, des tensions de compression permanentes dans les couches externes de celui-ci, ce qui a pour résultat une résistance supérieure à la rupture pour la flexion, et, d'autre part, des contraintes de traction dans les couches internes de la pièce de verre, ce qui a pour résultat qu'en cas de bris, la pièce de verre se divise en un grand nombre de fragments, réduisant ainsi les risques de blessure par lacération.

Les feuilles de verre trempé chimiquement (par un traitement de diffusion d'ions) présentent de bonnes caractéristiques de fragmentation en cas de rupture. Toutefois, les feuilles de verre chimiquement trempé ne présentent pas une résistance suffisante à la rupture sous l'effet du choc de petits objets durs qui entaillent la surface du verre. En effet, l'épaisseur de la couche en compression en surface du verre trempé chimiquement n'est guère que de l'ordre de 50 µm. Ce défaut du verre trempé chimiquement est particulièrement important dans le cas de feuilles de verre de grande superficie, telles que des pare-brise de voitures.

Le brevet FR-2 138 711 propose de remédier à cet inconvénient du verre chimiquement trempé en maintenant la feuille de verre élastiquement fléchie de manière telle que des contraintes de compression, dues à l'état fléchi, existent dans un des côtés, le côté ainsi mis en compression étant utilisé comme "face extérieure" de l'article réalisé, c'est-à-dire la face de la feuille de verre qui risque d'être soumise à la projection de petits objets durs (par exemple, la face extérieure d'un pare-brise de voiture).

La technique décrite dans le FR-2 138 711 concerne donc exclusivement le verre trempé chimiquement. On remarquera que cette technique ne permet pas d'obtenir, par flexion élastique d'une feuille de verre plane, une feuille de verre cintrée dont la surface convexe résiste aux impacts de petits objets durs.

Les buts et domaines d'application de la présente invention sont fondamentalement différents de ceux de la technique décrite dans le brevet FR-2 138 711.

La présente invention a pour but de réaliser une toiture vitrée, et notamment une toiture vitrée de serre présentant à la fois un meilleur taux de transmission de la lumière que les toitures vitrées classiques actuellement connues et une bonne résistance mécanique.

L'invention a également pour but de réaliser une telle toiture vitrée suivant un procédé de montage simple et rapide pouvant être exécuté, dans de bonnes conditions de sécurité, par une main-d'oeuvre peu spécialisée, et présentant de ce fait des avantages économiques.

Un autre but de l'invention est de réaliser une serre d'une grande luminosité interne, comportant une telle toiture et une ossature peu encombrante, occupant un minimum de place au sol.

La présente invention a pour objet une toiture vitrée cintrée formant une voûte continue s'étendant suivant un axe longitudinal, composée d'une ossature et d'une succession de travées arquées vitrées s'étendant perpendiculairement à cet axe; chacune de ces travées est composée de deux ou plusieurs panneaux vitrés cintrés juxtaposés; chacun de ces panneaux comporte une feuille rectangulaire de verre trempé thermiquement, originalement plane et cintrée à froid et un cadre cintré apte à maintenir la courbure sous contrainte de cette feuille de verre; ce cadre est formé par l'assemblage par leurs extrémités de profilés d'encadrement droits disposés le long des côtés droits de la feuille de verre et de profilés d'encadrement cintrés disposés le long des côtés courbes de la feuille de verre; les bords de la feuille de verre sont insérés dans une gorge disposée le long de la face interne du cadre; les panneaux vitrés cintrés formant une même travée sont réunis entre eux en solidarisant les uns aux autres les profilés d'encadrement droits des panneaux juxtaposés; les travées successives formant la toiture vitrée sont réunies entre elles en solidarisant les uns aux autres les profilés d'encadrement cintrés des panneaux vitrés cintrés formant ces travées juxtaposées.

Les feuilles de verre que portent les panneaux de verre cintrés encadrés sont constituées de verre trempé thermiquement; elles sont originalement planes et cintrées à froid. Dans le cas présent, le terme "verre trempé thermiquement" couvre également le verre dit "thermiquement durci" ainsi que le verre feuilleté formé de deux feuilles de verre trempé ou durci thermiquement réunies par une couche intermédiaire de plastomère adhésif transparent tel que du poly(butyral de vinyle).

Dans une forme de réalisation préférée de l'invention, un entrait est disposé transversalement dans le plan séparant deux travées successives; cet entrait joint les coins inférieurs des panneaux vitrés cintrés disposés aux extrémités de chaque travée.

Suivant une forme de réalisation particulière, les coins des panneaux vitrés cintrés réunis entre eux sont reliés par des contrefiches à l'entrait situé dans le plan transversal correspondant.

Suivant une forme d'exécution particulière, les profilés d'encadrement cintrés sont reliés à l'entrait correspondant par deux contrefiches fixées à ces profilés de part et d'autre de leur point de jonction.

Suivant une autre forme de réalisation, l'ossature comporte des fermes composées d'un profilé courbe d'extrados et d'un entrait, ces fermes étant disposées, perpendiculairement à l'axe de chaque travée, sous les profilés d'encadrement cintrés des panneaux vitrés cintrés qu'elles supportent. Ces fermes comportent, de préférence, des contrefiches reliant l'entrait au profilé courbe d'extrados, à l'endroit de la jonction des coins des panneaux vitrés cintrés. Suivant une variante de réalisation, un profilé raidisseur réunit le sommet du profilé courbe d'extrados avec chaque point de jonction entre ce profilé courbe d'extrados et l'entrait. Suivant une autre variante de réalisation, le profilé d'extrados de chaque ferme est relié à l'entrait par des câbles.

Dans une forme de réalisation de la toiture suivant l'invention, les travées reposent par leur point bas sur des longerons s'étendant suivant l'axe longitudinal de la toiture.

Dans une forme de réalisation préférée de la toiture, les longerons sont des profilés creux et servent à la fois de support pour la toiture et de gouttière pour l'évacuation des eaux pluviales.

Dans une réalisation particulière des longerons, la partie supérieure de la section des longerons comporte un évasement et de part et d'autre de cet évasement, des encoches dont la forme correspond au profil extérieur du cadre d'un panneau vitré cintré; des orifices, ménagés le long de la génératrice inférieure de cet évasement et de ces encoches, les mettent en communication avec le volume interne du longeron de façon à permettre le passage des eaux de ruissellement.

Dans une forme de réalisation particulière de l'invention, la toiture comporte des travées basculant dans leur ensemble avec leurs entraits autour d'un axe horizontal situé sur l'un des deux longerons sur lequel elles s'appuient; le pivotement de la travée se fait autour d'une charnière déboîtable, dont la partie fixe est constituée par une nervure cylindrique solidaire de ce longeron, la partie mobile solidaire du cadre de la partie ouvrante comportant une languette en arc de cercle. Une telle toiture est munie de moyens aptes à manoeuvrer ces travées basculantes et à les maintenir en position ouverte ou fermée. En outre, dans une telle toiture, des entraits supplémentaires sont avantageusement disposés transversalement entre les longerons dans les plans verticaux séparant deux travées successives.

Suivant une autre forme de réalisation, la toiture selon l'invention comporte des parties ouvrantes, chacune étant constituée d'au moins un panneau vitré cintré mobile relié par une ou plusieurs charnières à l'ossature de la serre, le bord inférieur du cadre de la dite partie ouvrante s'appliquant de façon jointive sur le bord supérieur de l'ossature, lorsque la partie ouvrante est en position fermée, cette partie ouvrante comportant des moyens aptes à la manoeuvrer et à la maintenir en position ouverte ou fermée.

Suivant une forme de réalisation particulière de la toiture, les parties ouvrantes sont disposées de part et d'autre d'un longeron de faîtage qui est un élément constitutif de l'ossature, la charnière étant formée d'une partie fixe constituée par une nervure cylindrique portée par le longeron de faîtage et d'une partie mobile comportant une rainure en forme d'arc cylindrique, solidaire du cadre de la partie ouvrante.

Suivant une variante de réalisation, les fermes et les travées reposent par leur point bas sur des longerons s'étendant parallèlement à l'axe de la toiture, ces longerons étant des profilés creux servant de gouttière pour l'évacuation des eaux pluviales. Ces profilés creux comportent à leur partie supérieure un évasement et ils ont des faces latérales adaptées à la forme des profilés d'encadrement et des extrémités des profilés d'extrados des fermes qui reposent sur eux. La dite ferme est, en outre, fixée à une mâchoire passant sous le longeron, un organe de serrage disposé entre les deux parties de cette mâchoire assure l'immobilisation de la dite ferme par rapport au longeron; des orifices ménagés le long de la génératrice inférieure de l'évasement et des encoches mettent ces parties en communication avec le volume interne du longeron, de façon à permettre le passage des eaux de ruissellement.

Suivant une forme de réalisation préférée, les longerons sont supportés par des colonnes. Avantageusement, ces colonnes sont creuses et servent de descente pour les eaux recueillies dans les longerons (gouttières).

L'invention a également pour objet une serre qui comporte une toiture telle que définie ci-dessus et des parois latérales constituées de panneaux vitrés plans encadrés par des profilés de même type que les profilés utilisés pour les cadres des panneaux vitrés cintrés formant la toiture.

Dans une forme de réalisation avantageuse, la serre réalisée selon l'invention comporte des panneaux vitrés munis d'un survitrage; ce survitrage est constitué d'une feuille de verre maintenue parallèlement au panneau vitré par des profilés d'encadrement solidarisés par emboîtement élastique dans des rainures en T ménagées dans les profilés d'encadrement des panneaux vitrés constituant la serre.

L'invention a également pour objet un procédé de montage d'une toiture conforme à l'invention; ce procédé comporte les étapes suivantes :
- assemblage sur gabarit de panneaux vitrés cintrés à froid, chacun de ces panneaux comportant une feuille rectangulaire de verre trempé thermiquement, initialement plane, cintré à froid et un cadre cintré formé de profilés d'encadrement, apte à maintenir la courbure sous contrainte de la feuille de verre, les dits panneaux formant, ensemble une travée, étant réunis entre eux en solidarisant les profilés d'encadrement droits des panneaux vitrés cintrés juxtaposés;
- fixation d'un entrait reliant entre eux deux coins inférieurs opposés de la travée ainsi constituée;
- fixation de contrefiches reliant l'entrait aux cadres accolés des panneaux vitrés cintrés formant la travée;
- montage du côté opposé à l'entrait, d'un tirant provisoire reliant entre eux les deux autres coins inférieurs de cette travée;
- soulèvement, par un engin de manutention, et mise en place successive de chacune des travées ainsi réalisées, dans leur ensemble, sur des éléments de support ou d'ossature prévus à cet effet, et
- solidarisation des travées entre elles et solidarisation des dites travées aux éléments de support ou d'ossature, les travées successives composant la toiture étant réunies entre elles en solidarisant entre eux les profilés d'encadrement cintrés des panneaux vitrés cintrés formant les travées juxtaposées.

L'invention a également pour objet un procédé pour le montage des toitures vitrées cintrées ayant une ossature qui comporte des fermes avec des profilés d'extrados qui supportent les panneaux vitrés cintrés. Dans ce cas, le procédé comporte les opérations suivantes :
- creusement de trous de fondation à l'emplacement des futures colonnes de l'ossature,
- mise en place de socles de colonnes préfabriqués en usine, présentant un fourreau de diamètre correspondant à celui des colonnes,
- mise en place de chapiteaux coiffant les colonnes,
- mise en place des colonnes,
- pose des longerons sur les colonnes correspondantes, parallèlement à l'axe des travées,
- montage des fermes,
- placement des fermes entre les longerons, perpendiculairement à l'axe des travées,
- montage d'un longeron de faîtage entre les fermes,
- solidarisation des fermes et des chapiteaux,
- mise en place et fixation de panneaux vitrés cintrés fixes sur les fermes et les longerons,
- mise en place de panneaux vitrés cintrés mobiles de part et d'autre du longeron de faîtage et solidarisation de ces panneaux avec la partie mobile de charnières fixées au longeron de faîtage.

Suivant un mode d'exécution avantageux, les cadres des panneaux vitrés cintrés sont solidarisés entre eux et sont fixés à l'ossature de support au moyen de clips dotés d'ergots élastiques prenant appui dans un sillon ménagé le long de ces cadres.

Les panneaux vitrés cintrés utilisés pour la construction des toitures et serres pouvant être de grande dimension, on comprendra que ces dernières peuvent avoir un très bon taux de transmission de la lumière, le rapport entre les surfaces opaques et les surfaces transparentes étant très faible.

Par ailleurs, la résistance mécanique de la toiture est très bonne, ce qui est dû au fait qu'une feuille de verre cintrée est nettement plus rigide qu'une feuille plane par suite de l'augmentation de son moment d'inertie.

Il faut remarquer que le verre en forme de feuille mince recuit est relativement fragile et ne pourrait subir un cintrage à froid que pour de très grands rayons de courbure, sa contrainte de rupture à la traction étant de l'ordre de 50 N/m².

Le verre thermiquement trempé (ou durci) est plus résistant. Sa contrainte de rupture évolue en fonction de son degré de trempe et peut atteindre 200 N/m² ou davantage.

Cependant, en pratique, après cintrage, la contrainte d'extension côté convexe de la feuille de verre cintré dans les conditions d'utilisation proposées doit être nettement inférieure à la précontrainte de compression due à la trempe du verre, ce qui permet de travailler en toute sécurité et d'obtenir une cloison correspondant aux normes de sécurité en vigueur en la matière. On obtient de plus une meilleure résistance à l'impact, ainsi qu'on peut le voir en se référant au tableau ci-après.

| Verre | | | | Résistance à l'impact (joules) |
|---|---|---|---|---|
| Dimensions mm | Epaisseur mm | Traitement thermique | Rayon de courbure forcée m | |
| 997 x 1650 | 3,8 | recuit | plan | 13 |
| 2000 x 3210 | 3,8 | trempé | 4,6 | 25 |
| 2000 x 3210 | 3,8 | trempé | 9,6 | 27 |
| 2000 x 3210 | 4,8 | trempé | 9,6 | 34 |

Pour l'appréciation de ce tableau, on se rappellera qu'un grelon peut atteindre une énergie cinétique de 20 joules.

Les toitures ou serres suivant l'invention peuvent être montées de manière plus simple et rapide que ce n'est le cas pour des toitures ou serres antérieurement connues. La réalisation de ces toitures ou serres suivant l'invention peut se faire par une main-d'oeuvre peu spécialisée puisqu'elle consiste essentiellement à réunir entre eux des panneaux vitrés encadrés, en solidarisant entre eux les cadres de ces panneaux (par exemple par boulonnage). Ce travail de montage peut également se faire dans de bonnes conditions de sécurité puisqu'il ne nécessite plus la manipulation de feuilles de verre non encadrées.

D'autres particularités et avantages de l'invention ressortiront de la description de modes de réalisation particuliers spécifiés ci-après, référence étant faite aux figures annexées, dans lesquelles :

la Fig. 1 est une vue en perspective d'une serre traditionnelle;
la Fig. 2 est une vue en perspective d'une serre-tunnel comportant une toiture selon l'invention, à une échelle identique à celle de la Fig. 1;
la Fig. 3 est une vue en perspective d'une serre à deux chapelles selon l'invention, comportant des versants de travée relevables;
la Fig. 4 est une vue en perspective d'une serre selon l'invention comportant des travées relevables dans leur ensemble;
la Fig. 5 est une vue en coupe suivant la ligne V-V de la Fig. 4, montrant un détail de la charnière de la serre de la Fig. 4;
la Fig. 6 est une vue en coupe suivant la ligne VI-VI de la Fig. 2, montrant un longeron d'une serre selon la Fig. 2;
la Fig. 7 est une vue en coupe avec interruption d'une partie de toiture de serre comportant un panneau vitré cintré ouvrable (comme montré à la Fig. 2);
la Fig. 8 est une vue éclatée, avec arrachement partiel, d'un noeud d'assemblage de quatre panneaux vitrés cintrés fixes de la toiture suivant l'invention;
la Fig. 9 est une vue schématique d'une phase d'exécution du procédé de montage d'une travée de la toiture selon l'invention;
les Fig. 10 et 11 sont des vues partielles en perspective de serres suivant d'autres formes d'exécution de l'invention;
la Fig. 12 est une vue éclatée, avec arrachement partiel, d'un noeud d'assemblage d'une variante de panneaux d'une serre selon l'invention;
la Fig. 13 est une vue en coupe avec interruption d'un longeron de serre selon la Fig. 10, et
la Fig. 14 est une vue en coupe avec interruption, d'une variante de panneau ouvrable d'une serre selon l'invention.

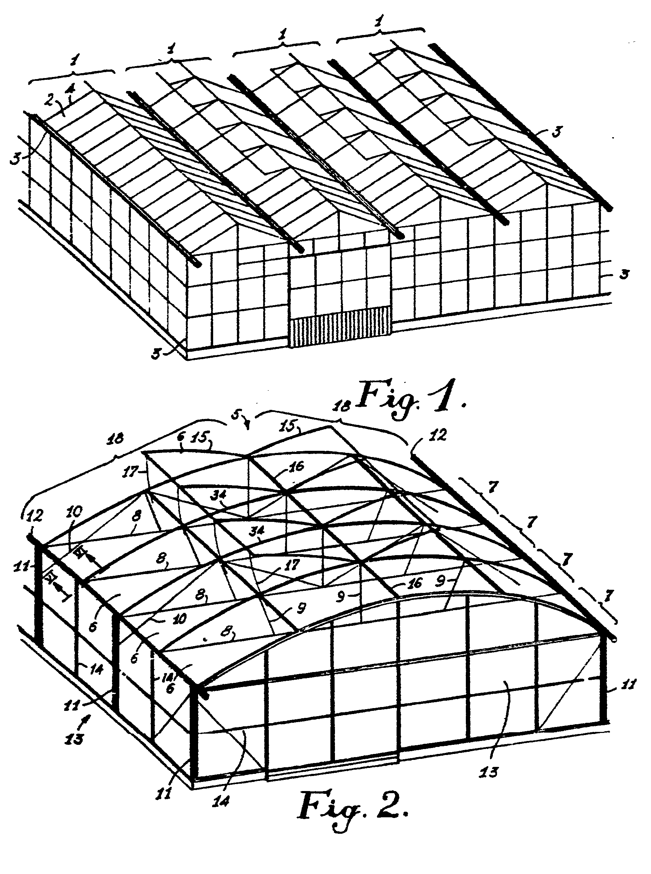

La serre traditionnelle montrée à la Fig. 1 est constituée d'une série de chapelles longitudinales 1 relativement étroites accolées, le prix d'une telle serre augmentant notablement avec la largeur des travées. Les vitres 2 constituant la couverture sont de faibles dimensions. L'ossature 3 et les supports de vitrage 4 sont distincts du matériau de couverture, et forment un réseau serré.

La Fig. 2 est une vue en perspective, à la même échelle que la serre traditionnelle représentée à la Fig. 1, d'une serre tunnel dont la toiture est réalisée avec les éléments et suivant le procédé de l'invention.

La toiture 5 est constituée de panneaux vitrés cintrés 6 directement solidarisés entre eux.

Chaque rangée transversale de panneaux 6 forme une travée 7. Les coins inférieurs des panneaux 6 extrêmes de chaque travée 7 sont reliés entre eux par un entrait 8 reprenant les sollicitations latérales exercées sur la toiture 5. Des contrefiches 9 relient la jonction de quatre panneaux 6 à l'entrait 8 correspondant. Un entrait 8 sur deux comporte, en outre, une pièce de contreventement 10 s'appuyant sur une colonne creuse 11 correspondante. Ces colonnes creuses 11 supportent des longerons 12 sur lesquels reposent les extrémités des travées 7.

Les vitrages montés dans les parois latérales 13 de la serre sont serrés dans des profilés 14 de section similaire à celle des profilés utilisés pour les panneaux vitrés cintrés 6 constituant la toiture, ce qui permet de réduire le coût de production.

L'aération de la serre est assurée par la rotation de panneaux vitrés cintrés mobiles 15 formant vasistas, autour d'un axe situé sur le longeron de faîtage 16 de la serre.

Cette aération s'effectue, selon l'orientation du vent, en relevant, à l'aide de moyens appropriés (par exemple des crémaillères 17), des panneaux mobiles 15 situés sur l'un ou l'autre des versants 18 de la toiture 5.

Une chapelle de serre comportant une toiture 5 selon l'invention peut couvrir une surface de sol équivalant à celle de plusieurs chapelles de serre classique, sans que l'ossature en soit alourdie, avec une résistance accrue aux intempéries (notamment à la grêle), le rapport entre les surfaces opaques et les surfaces transparentes étant notablement réduit.

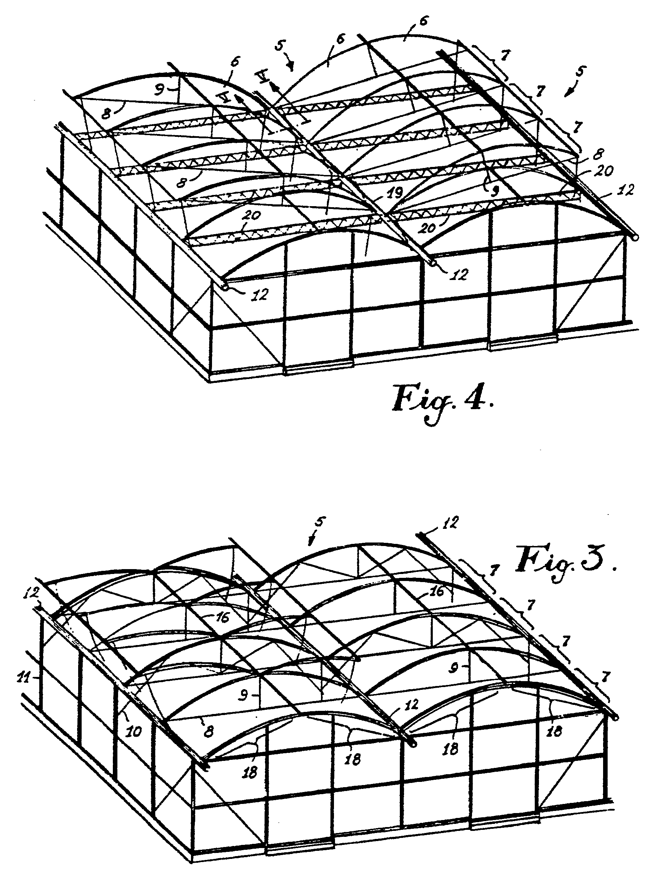

La Fig. 3 est une vue en perspective d'une serre couverte d'une toiture 5 suivant l'invention, dans laquelle tout le versant 18 d'une travée 7 peut pivoter vers le haut autour d'un axe situé sur le longeron de faîtage 16. Chaque versant 18 de la toiture 5 est constitué d'un panneau vitré cintré 6 ayant un rayon de courbure de 4,50 m environ, ce qui lui confère une très grande rigidité.

La Fig. 4 est une vue en perspective d'une serre munie d'une toiture 5 suivant l'invention comportant des travées 7 mobiles dans leur ensemble. Ces travées 7 mobiles sont composées de panneaux vitrés cintrés 6, d'entraits 8 et de contrefiches 9 solidaires de ces panneaux 6.

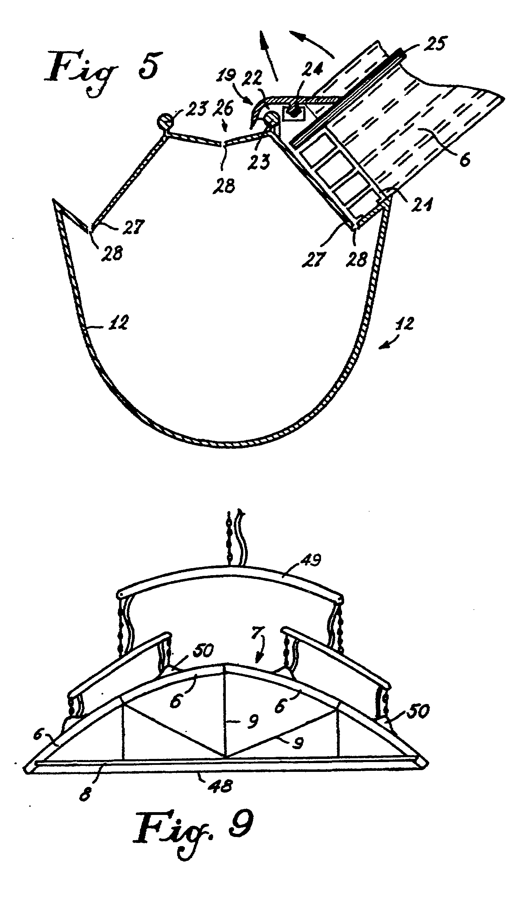

Des charnières déboîtables 19 décrites ci-après en se référant à la Fig. 5 réunissent chacune de ces travées 7 mobiles au longeron 12 sur lequel elles reposent.

Des poutrelles 20 disposées transversalement assurent le maintien des longerons 12 lorsque les travées 7 sont basculées.

La Fig. 5 est une vue en coupe d'un longeron 12 portant une charnière déboîtable 19 de la serre décrite à la Fig. 4.

Le profilé d'encadrement 21 du panneau vitré cintré 6 est prolongé, du côté extérieur, par une languette en arc de cercle 22 formant une gorge arrondie dans laquelle une nervure cylindrique 23, portée par le longeron 12, vient s'insérer.

Un profilé d'étanchéité 24 guide les eaux de ruissellement dévalant le long de la feuille de verre trempé thermiquement 25 vers un évasement 26 ménagé à la partie supérieure du longeron 12 et évite ainsi la stagnation des eaux de ruissellement entre la feuille de verre trempé 25 cintrée à froid et le profilé d'encadrement 21.

Ce longeron 12 présente, de part et d'autre, une encoche 27 dont la section correspond à celle du profilé d'encadrement 21 des panneaux vitrés cintrés 6. L'angle inférieur de cette encoche 27 comporte des orifices 28 qui la mettent en communication avec le volume intérieur du longeron 12. L'évasement 26 ménagé au sommet du longeron 12 comporte également des orifices 28, de sorte que les eaux de ruissellement provenant de la pluie aussi bien que de la condensation sont amenées à l'intérieur du longeron 12 qui fait office de gouttière. De ces longerons 12, l'eau descend par une colonne creuse 11 de l'armature vers un point de collecte.

La Fig. 6 est une vue en coupe d'un longeron 12 de serre selon la Fig. 2. Une ferrure arrondie 29 passe sous le longeron 12 dont elle épouse la courbure. Du côté extérieur de la serre, un crochet 30 prend appui dans l'encoche 27 de façon à immobiliser le longeron 12. Du côté intérieur de la serre, le longeron 12 est solidarisé au cadre 31 d'un panneau vitré cintré 6 engagé dans l'encoche 27 symétrique à l'encoche 27 extérieure. Un fer en V 32 relie le cadre 31 du panneau vitré cintré 6 à l'autre extrémité de la ferrure 29 passant sous le longeron 12. Ce fer en V 32 fixe également l'extrémité de l'entrait 8 qui relie les deux extrémités d'une travée 7.

L'extrémité de ce fer en V 32 est recourbée à angle droit et s'engage dans une encoche 33 pratiquée dans le cadre 31 du panneau vitré cintré 6 formant le bas de la travée 7.

La paroi latérale 13 comporte une vitre et un survitrage solidarisés par emboîtement élastique de leurs profilés d'encadrement respectifs.

La Fig. 7 est une vue en coupe avec interruption d'une travée 7 d'une serre suivant la Fig. 2 comportant des panneaux vitrés cintrés fixes et des panneaux vitrés cintrés mobiles 15. Un châssis fixe 34 de dimensions équivalentes à celles d'un panneau vitré cintré 6 est fixé dans la travée. Ce châssis 34 est surmonté d'un panneau vitré cintré mobile 15 de dimensions correspondantes, ce châssis 34 et ce panneau 15 s'ajustant de façon jointive. Le panneau vitré cintré mobile 15 pivote autour d'une charnière 35 disposée longitudinalement au-dessus du longeron de faîtage 16 de la travée 7. Les profilés d'encadrement 36 faisant partie du cadre du panneau mobile 15 sont prolongés par une rainure en forme d'arc cylindrique qui forme la partie mobile de la charnière, laquelle peut pivoter autour d'une nervure cylindrique 37 solidaire du longeron de faîtage 16 de la toiture 5. Des joints souples 38, fixés dans les rainures en T

EP 0 282 469 B1

39 disposées le long du châssis 34, assurent l'étanchéité de la fermeture. Un profilé d'encadrement 40 du panneau mobile 15 opposé au profilé d'encadrement 36 formant charnière est prolongé par un caisson triangulaire améliorant l'évacuation des eaux de ruissellement. Le profilé d'encadrement 40 comporte une fente 41 et des perforations 42, ce qui permet l'évacuation des eaux de condensation se formant sur la face interne de la vitre du panneau vitré cintré mobile 15. Les contrefiches 9 relient les panneaux vitrés cintrés 6 et le châssis fixe 34 avec l'entrait 8 correspondant.

La Fig. 8 est une vue éclatée, avec arrachement partiel, d'un noeud d'assemblage de quatre panneaux vitrés cintrés 6 formant la toiture 5 suivant l'invention. Les panneaux vitrés cintrés 6 sont représentés joints deux à deux et dotés de deux types de moyens d'assemblage.

Des perforations transversales 43 s'étendant perpendiculairement à la face interne des profilés d'encadrement 21 sont espacées le long du cadre 31 de chaque panneau vitré cintré 6. Deux panneaux vitrés cintrés 6 contigus peuvent ainsi être solidarisés par simple boulonnage.

Par ailleurs, des écrous rectangulaires 44 peuvent être insérés dans des rainures en T 39 courant longitudinalement le long des profilés 21. La forme allongée de ces écrous 44 répartit les sollicitations et évite une déformation localisée des bords de la rainure en T 39.

En introduisant une vis 45 dans le trou taraudé de ces écrous 44, on peut fixer le cadre 31 à des contrefiches 9 de l'ossature 3. Sur la face supérieure des profilés d'encadrement 21, des rainures en T 39 permettent l'insertion d'une languette d'accrochage 46 d'un profilé d'étanchéité souple 47 recouvrant la jointure entre deux panneaux 6 adjacents.

La Fig. 9 est une vue schématique d'une phase de montage d'une toiture 5 suivant l'invention. Une travée 7 complète composée des quatre panneaux vitrés cintrés 6 accolés à été assemblée sur un gabarit. Un entrait 8 étant commun à deux travées 7, les deux entraits 8 ne peuvent être montés simultanément; pour éviter les sollicitations en torsion lors du montage, un tirant provisoire 48 est accroché aux deux extrémités de la travée 7. Un engin de manutention 49, comportant en l'occurrence des dispositifs de maintien à dépression 50, soulève l'ensemble de la travée 7 ainsi consolidée et la place sur l'ossature 3 à laquelle elle peut être fixée par boulonnage. Lorsque la travée 7 comporte des panneaux vitrés cintrés mobiles 15, ceux-ci sont solidarisés durant les manutentions par une pièce de solidarisation assurant la rigidité de l'ensemble.

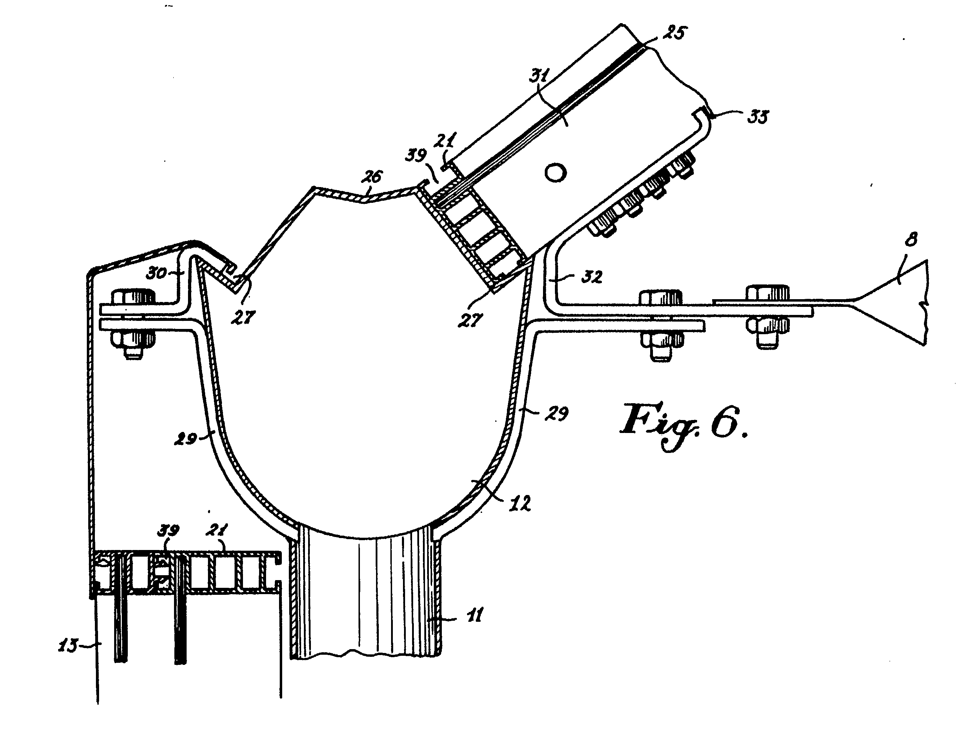

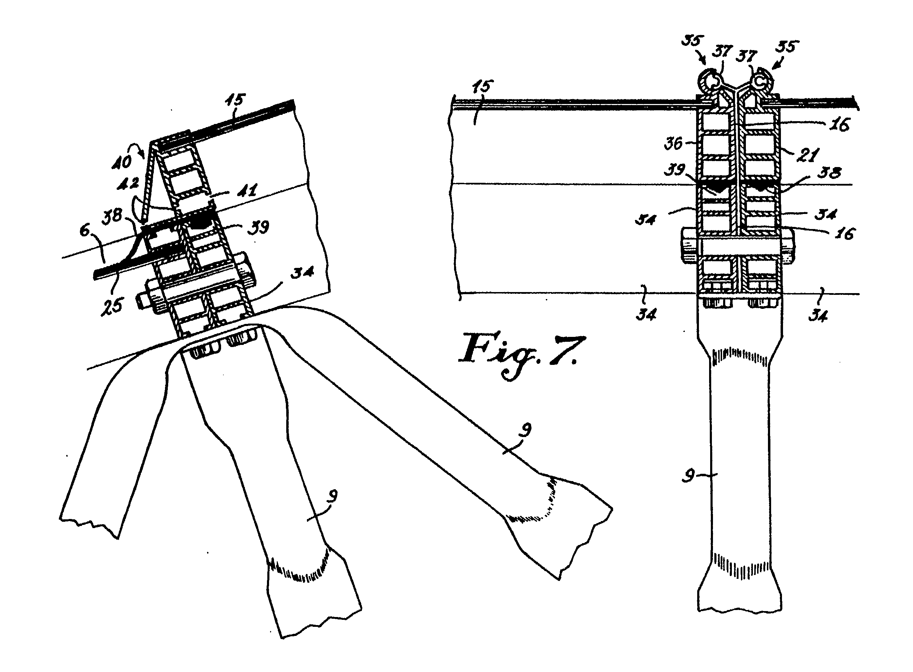

La Fig. 10 montre une partie de l'ossature d'une variante de serre suivant l'invention, qui permet d'illustrer une autre technique de montage rapide, avantageuse pour l'édification de serres en série.

De petits socles en béton 51 destinés à soutenir les colonnes 11 sont préfabriqués en usine; ils présentent à leur sommet un fourreau cylindrique de diamètre correspondant à celui d'une colonne 11.

Ces socles 51 sont déposés sur le site d'érection des serres dans des trous creusés à l'emplacement des colonnes 11 et scellés en place par un coulis de ciment. Les colonnes 11, coiffées d'un chapiteau 52, sont glissées en place dans chacun des socles 51. Cette opération peut se faire directement au moyen d'un engin motorisé.

Des longerons 53 sont ensuite posés sur les colonnes 11 correspondantes, par un engin de manutention léger (tel qu'une grue de camion). Des fermes 54 sont amenées toutes montées sur le site. La manipulation de ces fermes 54 est aisée car, de par la conception de la serre, elles sont très légères.

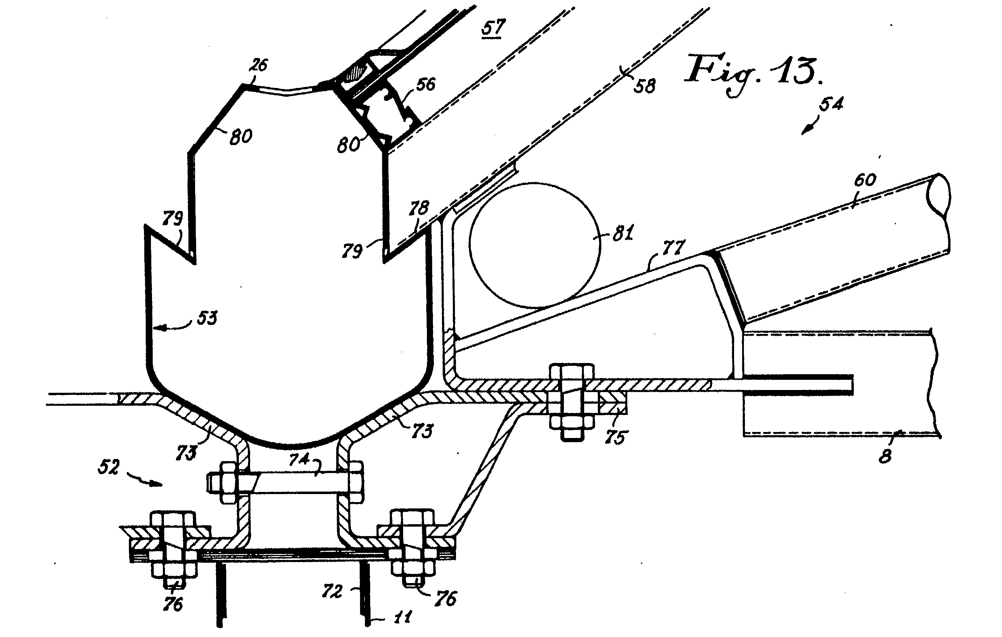

Les fermes 54 sont disposées entre les longerons 53, à l'aplomb des colonnes 11 notamment. On pose enfin le longeron de faîtage 55 de l'ossature 3, cette dernière opération pouvant aisément être réalisée par un homme monté dans une nacelle mobile. On serre alors les chapiteaux 52, opération qui sera expliquée plus loin en se référant à la Fig. 13.

L'ossature 3 étant ainsi montée, on procède à la pose des panneaux vitrés cintrés 6 fixes au bas des versants des travées 7, un des profilés droits 56 reposant sur le longeron 53, les profilés cintrés 57 reposant sur le profilé d'extrados 58 de la ferme 54, et étant fixés sur celui-ci à l'aide de clips, par exemple.

On monte enfin les panneaux vitrés cintrés mobiles 15 sur la partie mobile de la charnière de faîte, ce qui peut également se faire à l'aide de clips. Dans la serre ici représentée, la contrefiche simple 9, reliée à la jointure entre deux panneaux vitrés cintrés 6, est remplacée par une contrefiche double 59, qui répartit mieux les efforts sur les cadres. Un profilé raidisseur 60 relie le chapiteau 52 et le longeron de faîtage 55. Ce profilé 60 sert de rail de guidage éventuel à un store d'occultation qui peut être déroulé le long de chaque versant.

Les liaisons entre le longeron de faîtage 55 et l'entrait 8, sollicitées uniquement en traction, sont assurées par des câbles 61.

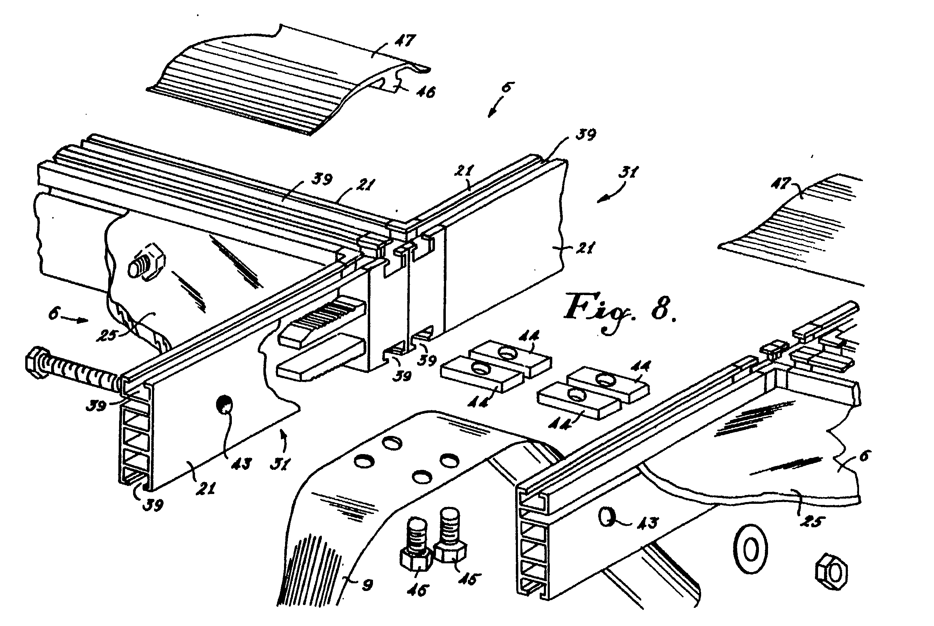

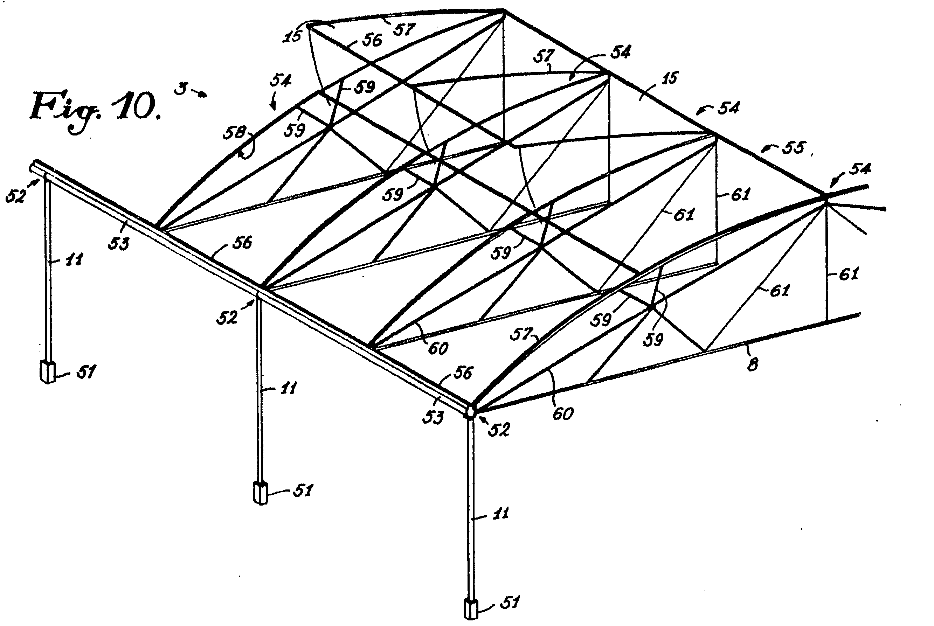

La Fig. 11 montre une forme simplifiée de ferme 62 permettant de réaliser une serre encore plus lumineuse; les contrefiches entre l'entrait et l'extrados 58 renforcé de la ferme sont remplacées par des câbles 61.

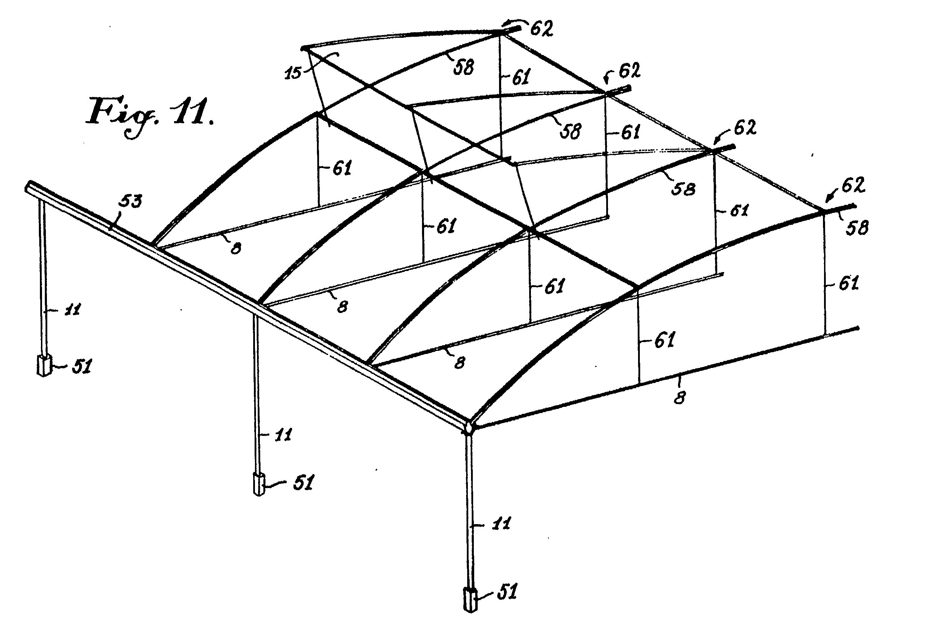

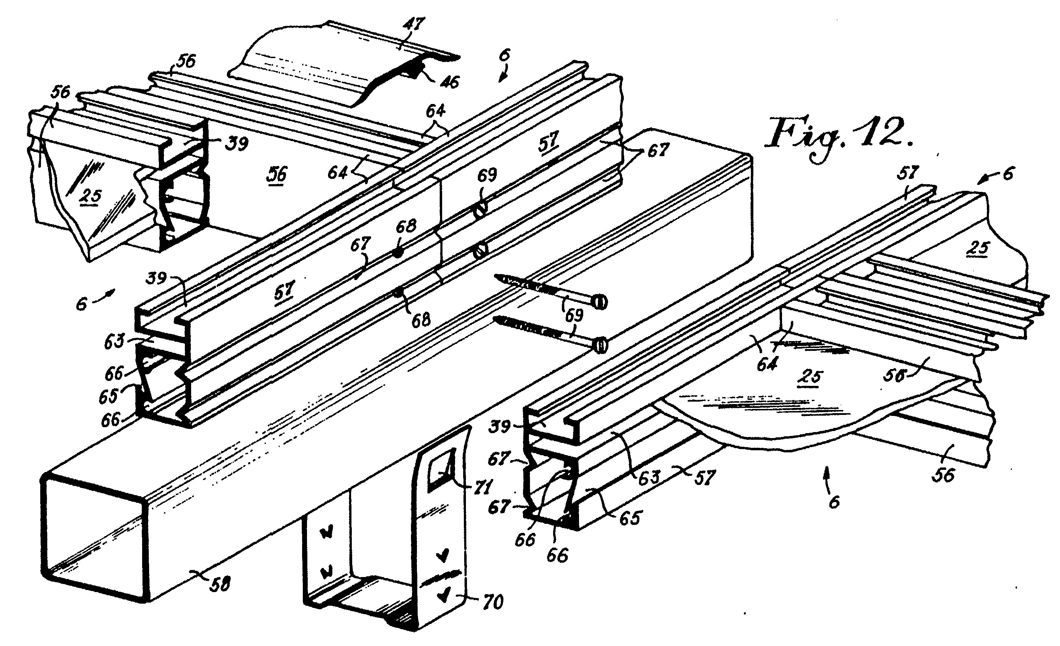

La Fig. 12 montre une autre forme de montage. Il s'agit d'une vue éclatée, avec arrachement partiel, d'un autre mode d'exécution d'un noeud d'assemblage de quatre panneaux vitrés cintrés 6 dotés d'un type d'encadrement différent, et la fixation de ces panneaux 6 sur un élément 58 de l'ossature 3.

Dans cette forme d'exécution, un panneau vitré cintré 6 comprend une feuille de verre trempé thermiquement 25. Cette feuille de verre 25, initialement plane, est cintrée élastiquement et ses bords sont insérés dans une gorge 63 ménagée sur la face interne du cadre 64 formé par l'assemblage de deux profilés cintrés 57 et deux profilés droits 56 qui présentent la même section transversale.

La partie supérieure des profilés 56 et 57 est identique à celle des profilés 21 décrits plus haut, et présente donc une rainure longitudinale 39 en T renversé ouverte vers le haut.

Le côté des profilés 56 et 57, qui est tourné vers l'intérieur du cadre 64 présente une gorge 63 dans laquelle est engagé le bord de la feuille de verre 25 encadrée.

En dessous de la gorge 63, les profilés 56 et 57 consistent en un caisson dont la section transversale a l'allure générale d'un rectangle.

La paroi de ce caisson tournée vers l'intérieur du cadre 64 présente du côté extérieur du caisson un sillon 65 dont le pan inférieur forme un angle aigu (arête d'accrochage) avec la partie de cette paroi située sous ce sillon 65. A l'intérieur du caisson, cette même paroi présente deux paires de nervures, chaque paire de nervures formant une gaine tubulaire fendue 66. La paroi de caisson tournée vers l'extérieur du cadre 64 présente à l'extérieur deux sillons 67. Les fonds des sillons 67 se trouvent respectivement au même niveau que l'axe des gaines tubulaires fendues 66.

Comme le montre la Fig. 6, les profilés 56 et 57 sont assemblés entre eux pour former les cadres 64 des panneaux vitrés cintrés 6. Des trous 68 situés au niveau des sillons 67 traversent les deux parois latérales des profilés 57, à proximité de leurs extrémités. Des vis taraudeuses 69 traversent les trous 68 et s'engagent dans les petites gaines tubulaires fendues 66 des profilés 56, solidarisant ainsi l'extrémité d'un profilé 57 avec l'extrémité d'un profilé 56. Les têtes des vis 69 s'engagent dans les sillons 67.

Le profilé d'extrados 58, sur lequel reposent les cadres 64 des panneaux vitrés cintrés 6, a une largeur qui correspond à deux fois la largeur d'un profilé d'encadrement 57. Des clips en U 70 réunissent deux profilés 57 mis dos à dos et fixent ces profilés 57 sur le profilé d'extrados 58. A cette fin, chacune des branches verticales d'un clip 70 comporte un ergot élastique 71 qui s'engage dans le sillon 65 d'un profilé 56 (ou 57).

Sur la face supérieure des panneaux 6, les rainures 39 en T renversé des profilés 56 et 57 permettent l'insertion de la languette 46 d'un profilé d'étanchéité 47 recouvrant la jointure entre deux panneaux 6 juxtaposés.

La Fig. 13 est une vue en coupe montrant le longeron 53 d'une serre suivant la Fig. 10, à hauteur d'un chapiteau 52.

La colonne 11 est coiffée d'un chapiteau 52. La partie inférieure de ce chapiteau 52 est munie d'une virole 72 qui est emboîtée dans l'extrémité supérieure de la colonne 11. Ce chapiteau 52 comporte des mâchoires en V 73, dont la forme correspond à celle de la partie inférieure d'un longeron 53, formant un berceau pour le dit longeron 53.

Ces mâchoires 73 sont reliées par un organe de serrage 74 et sont prolongées chacune par une patte 75 destinée à l'assujettissement de la ferme 54.

Les mâchoires 73 sont montées sur la virole 72 du chapiteau 52 au moyen de boulons 76.

L'angle inférieur de la ferme 54 ici représentée, est constitué par un plat de liaison 77 qui relie l'entrait 8, le profilé raidisseur 60, et est soudé sur le profilé d'extrados 58.

Ce plat de liaison 77 est fixé par boulonnage au chapiteau 52. L'extrémité du profilé d'extrados 58 est taillée en biseau 78; la pointe de ce biseau 78 s'insère dans une encoche 79 de forme correspondante ménagée sur la face latérale du longeron 53.

Lorsque l'on resserre les mâchoires en V 73 à l'aide de l'organe de serrage 74, le profilé d'extrados 58 s'encastre dans l'encoche 79, assurant une liaison solide entre les différentes pièces de l'ossature.

Le profilé droit d'encadrement 56 d'un panneau vitré cintré 6 vient s'ajuster contre un replat 80 courant le long du longeron 53. Une fixation par clips (non représentée) solidarise le profilé d'encadrement courbe 57 du panneau vitré cintré 6 avec le profilé d'extrados 58 de la ferme 54. Un enrouleur 81 pour store est montré schématiquement à l'angle du profilé d'extrados 58 et du profilé raidisseur 60.

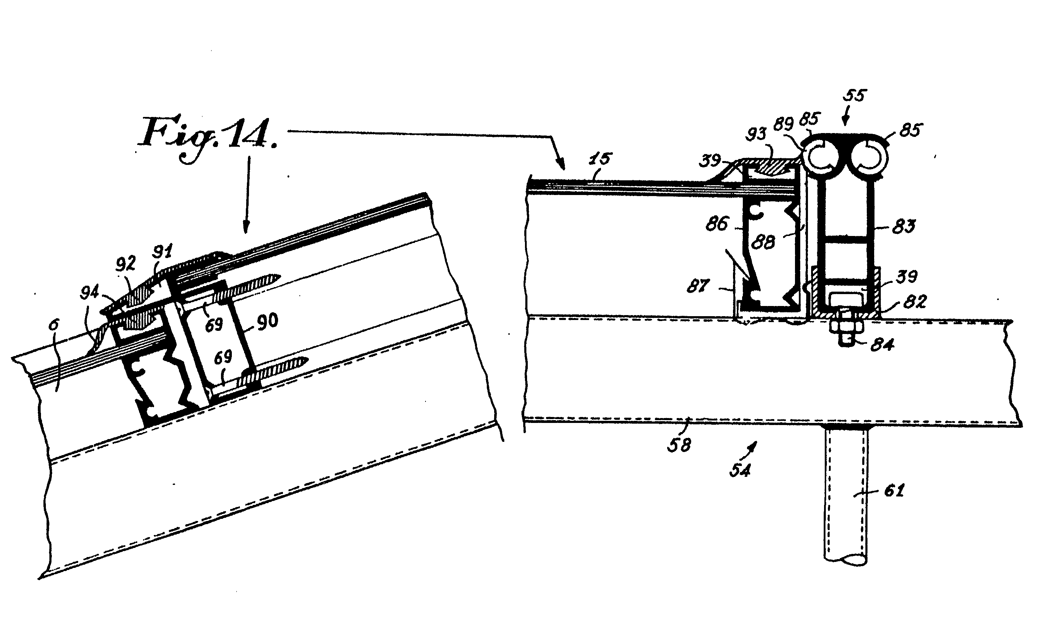

La Fig. 14 est une coupe avec interruption d'un panneau vitré cintré mobile 15, suivant un plan perpendiculaire à l'axe longitudinal d'une serre selon la Fig. 10.

Le profilé d'extrados 58 de la ferme 54 comporte, soudé en son point médian, un profilé en U 82. Sur ce profilé 82 vient s'ajuster, par boulonnage, le profilé à caissons 83 constituant le longeron de faîtage 55. Ce profilé 83 comporte, à une extrémité de sa section, une rainure en T 39 qui permet de le solidariser par des boulons 84 au profilé en U 82. L'autre extrémité de la section comporte deux rainures en C 85 formant les parties fixes de deux charnières.

Le profilé droit supérieur 86 du panneau mobile 15 formant vasistas est immobilisé par un clip 87 dans un profilé en L 88. L'extrémité supérieure de ce profilé 88 se prolonge par une nervure en C 89 formant charnière avec la rainure en C 85 du profilé à caissons 83 qui constitue le longeron de faîtage 55.

A la différence du système décrit à la Fig. 7, le panneau fixe 6 et le panneau mobile 15 reposent ici tous deux, dans le même alignement.

Le profilé d'encadrement droit, opposé à la charnière, est un profilé spécial 90.

Ce profilé 90 est prolongé vers le haut par un caisson triangulaire 91 améliorant l'évacuation des eaux de ruissellement.

Un joint souple 92, fixé à la partie supérieure du profilé spécial 90, et un joint souple 93, fixé à la partie supérieure du profilé 86 du panneau vitré cintré mobile 15, contribuent à éviter la stagnation d'eau dans l'encadrement du panneau 15.

Un joint souple 94, fixé dans la rainure 39 en T renversé du profilé 56 du panneau vitré cintré fixe 6, assure l'étanchéité entre ce profilé 56 et le profilé spécial 90 (lorsque le panneau vitré cintré mobile 15 est en position de fermeture).

## Revendications

1.- Toiture (5) vitrée cintrée formant une voûte continue s'étendant suivant un axe longitudinal, composée d'une ossature et d'une succession de travées (7) arquées vitrées s'étendant perpendiculairement à cet axe, caractérisée en ce que chaque travée (7) est composée de deux ou de plusieurs panneaux vitrés cintrés (6) juxtaposés, chacun de ces panneaux (6) comportant une feuille rectangulaire de verre trempé thermiquement, initialement plane et cintrée à froid (25) et un cadre cintré (31) apte à maintenir la courbure sous contrainte de la feuille de verre (25), le dit cadre (31) étant formé par l'assemblage par leurs extrémités de profilés d'encadrement (21, 56) droits disposés le long des côtés droits de la feuille de verre (25) et de profilés d'encadrement (21, 57) cintrés disposés le long des côtés courbes de la feuille de verre (25), les bords de la feuille de verre (25) étant insérés dans une gorge (63) disposée le long de la face interne du cadre (31), les panneaux vitrés cintrés (6) formant une même travée (7) étant réunis entre eux en solidarisant les uns avec les autres les profilés d'encadrement (21, 56) droits des panneaux juxtaposés, les travées (7) successives composant la toiture vitrée (5) étant réunies entre elles en solidarisant entre eux les profilés d'encadrement (21, 57) cintrés des panneaux vitrés cintrés (6) formant ces travées (7) juxtaposées.

2.- Toiture suivant la revendication 1, caractérisée en ce qu'un entrait (8) est disposé tranversalement dans le plan séparant deux travées (7) successives et relie les coins inférieurs des panneaux vitrés cintrés (6) disposés aux extrémités de chaque travée (7).

3.- Toiture suivant la revendication 2, caractérisée en ce que les coins des panneaux vitrés cintrés (6) réunis entre eux sont reliés par des contrefiches (9) à l'entrait (8) situé dans le plan transversal correspondant.

4.- Toiture suivant la revendication 2, caractérisée en ce que les profilés d'encadrement cintrés (21) sont reliés à l'entrait (8) correspondant par deux contrefiches (59) fixées à ces profilés (21) de part et d'autre de leur point de jonction.

5.- Toiture suivant la revendication 1, caractérisée en ce que l'ossature comporte des fermes (54) composées d'un profilé courbe d'extrados (58) et d'un entrait (8), les dites fermes (54) étant disposées perpendiculairement à l'axe de chaque travée (7), sous les profilés d'encadrement (21, 57) cintrés des panneaux vitrés cintrés (6) qu'elles supportent.

6.- Toiture suivant la revendication 5, caractérisée en ce que les fermes (54) comportent des contrefiches (9) reliant l'entrait (8) au profilé courbe d'extrados (58), à l'endroit de jonction des coins des panneaux vitrés cintrés (6).

7.- Toiture suivant la revendication 5, caractérisée en ce qu'un profilé raidisseur (60) réunit le sommet du profilé courbe d'extrados (58) avec chaque point de jonction entre ce profilé courbe d'extrados (58) et l'entrait (8).

8.- Toiture suivant la revendication 5, caractérisée en ce que le profilé d'extrados (58) de chaque ferme (54) est relié à l'entrait (8) par des câbles (61).

9.- Toiture suivant l'une quelconque des revendications précédentes, caractérisée en ce que les travées (7) reposent par leur point bas sur des longerons (12, 53) s'étendant parallèlement à l'axe de la toiture (5).

10.- Toiture suivant la revendication 9, caractérisée en ce que les longerons (12, 53) sont des profilés creux servant à la fois de support et de gouttière pour l'évacuation des eaux pluviales.

11.- Toiture suivant la revendication 10, caractérisée en ce que la partie supérieure des longerons (12) comporte un évasement (26) et, de part et d'autre de cet évasement (26), des encoches (27) dont la forme correspond au profil extérieur du cadre (31) d'un panneau vitré cintré (6), des orifices (28) ménagés le long de la génératrice inférieure de cet évasement (26) et de ces encoches (27) les mettant en communication avec le volume interne du longeron (12), de façon à permettre le passage des eaux de ruissellement.

12.- Toiture suivant l'une quelconque des revendications 9 à 11, caractérisée en ce qu'elle comporte des travées (7) basculant dans leur ensemble autour d'un axe horizontal situé sur l'un des deux longerons (12) sur lesquels elles s'appuient, le pivotement de la travée (7) se faisant autour d'une charnière déboîtable (19) dont la partie fixe est constituée par une nervure cylindrique (23) solidaire de ce longeron (12), la partie mobile, solidaire du cadre de la partie ouvrante, comportant une languette en arc de cercle (22), cette toiture (5) étant munie de moyens (17) aptes à manoeuvrer ces travées basculantes et à les maintenir en position ouverte ou fermée.

13.- Toiture suivant l'une quelconque des revendications 9 à 11, caractérisée en ce qu'elle comporte des parties ouvrantes, chaque partie ouvrante étant constituée d'au moins un panneau vitré cintré mobile (15) relié par une ou plusieurs charnières (35) à l'ossature de la serre, le bord inférieur du cadre de la dite partie ouvrante s'appliquant de façon jointive contre le bord supérieur d'une partie de l'ossature, lorsque la partie ouvrante est en position fermée, cette partie ouvrante comportant des moyens (17) aptes à la manoeuvrer et à la maintenir en position ouverte ou fermée.

14.- Toiture suivant la revendication 13, caractérisée en ce que les parties ouvrantes sont disposées de part et d'autre d'un longeron de faîtage (16) qui est un élément constitutif de l'ossature, la charnière (35) étant formée d'une partie fixe constituée par une nervure cylindrique (37) portée par le longeron de

9

faîtage (16) et d'une partie mobile comportant une rainure en forme d'arc cylindrique, solidaire du cadre de la partie ouvrante.

15.- Toiture suivant l'une quelconque des revendications 5 à 8, caractérisée en ce que les fermes (54) et les travées (7) reposent par leur point bas sur des longerons (53) s'étendant parallèlement à l'axe de la toiture, ces longerons (53) étant des profilés creux servant de gouttière pour l'évacuation des eaux pluviales, comportant à leur partie supérieure un évasement (26) et ayant des faces latérales adaptées à la forme des profilés d'encadrement (56) et des extrémités des profilés d'extrados (58) des fermes (54) qui reposent sur eux, chacune des dites fermes étant, en outre, fixée à une mâchoire (73) passant sous le longeron (53), un organe de serrage (74) disposé entre les deux parties de cette mâchoire (73) assurant l'immobilisation de la dite ferme (54) par rapport au dit longeron (53), des orifices (28) ménagés le long de la génératrice inférieure de l'évasement (26) et des encoches (79) les mettant en communication avec le volume interne du longeron (53) de façon à permettre le passage des eaux de ruissellement.

16.- Toiture suivant l'une quelconque des revendications 9 à 15, caractérisée en ce que les longerons (12, 53) sont supportés par des colonnes (11).

17.- Toiture suivant la revendication 16, caractérisée en ce que les colonnes (11) sont creuses et servent de descente pour les eaux pluviales.

18.- Serre caractérisée en ce qu'elle comporte une toiture suivant l'une quelconque des revendications 1 à 17, et des parois latérales (13) constituées de panneaux vitrés plans encadrés par des profilés (14) de même type que les profilés (21, 56, 57) utilisés pour les cadres (31) des panneaux cintrés (6) constituant la toiture (5).

19.- Serre suivant la revendication 18, caractérisée en ce qu'elle comporte des panneaux vitrés munis d'un survitrage, le dit survitrage étant constitué d'une feuille de verre maintenue parallèlement au panneau vitré par des profilés d'encadrement solidarisés par emboîtement élastique dans des rainures en T (39) ménagées dans les profilés d'encadrement des panneaux vitrés constituant la serre.

20.- Procédé de montage d'une toiture conforme à l'une quelconque des revendications 3 et 4, caractérisé en ce qu'il comporte les opérations suivantes :
- assemblage sur gabarit de panneaux vitrés cintrés (6), chacun de ces panneaux (6) comportant une feuille rectangulaire de verre trempé thermiquement, initialement plane, cintrée à froid (25) et un cadre cintré (31) apte à maintenir la courbure sous contrainte de la dite feuille de verre (25), les dits panneaux (6) formant ensemble une travée (7) étant réunis entre eux en solidarisant les profilés d'encadrement droits (21, 56) des panneaux vitrés cintrés (6) juxtaposés,
- fixation d'un entrait (8) reliant entre eux deux coins inférieurs opposés de la travée (7) ainsi constituée,
- fixation de contrefiches (9) reliant l'entrait (8) aux cadres accolés des panneaux vitrés cintrés (6) formant la travée (7),
- montage, du côté opposé à l'entrait, d'un tirant provisoire (48) reliant entre eux les deux autres coins inférieurs de cette travée (7),
- soulèvement, par un engin de manutention (49), et mise en place successive de chacune des travées (7), ainsi réalisées dans leur ensemble, sur des éléments de support ou d'ossature (3) prévus à cet effet, et
- solidarisation des travées (7) entre elles et par rapport aux éléments de support ou d'ossature (3), les travées (7) successives composant la toiture vitrée (5) étant réunies entre elles en solidarisant entre eux les profilés d'encadrement (21, 57) cintrés des panneaux vitrés cintrés (6) formant les travées (7) juxtaposées.

21.- Procédé de montage d'une toiture conforme à l'une quelconque des revendications 16 et 17, caractérisé en ce qu'il comporte les opérations suivantes :
- creusement de trous de fondation à l'emplacement des futures colonnes (11) de l'ossature,
- mise en place de socles (51) de colonnes, préfabriqués en usine, présentant un fourreau de diamètre correspondant à celui des colonnes (11),
- mise en place de chapiteaux (52) coiffant les colonnes (11),
- mise en place des colonnes (11),
- pose des longerons (53) sur les colonnes (11) correspondantes, parallèlement à l'axe des travées,
- montage des fermes (54),
- placement des fermes (54) entre les longerons (53), perpendiculairement à l'axe des travées,
- montage d'un longeron de faîtage (55) entre les fermes (54),
- solidarisation des fermes (54) et des chapiteaux (52),
- mise en place et fixation de panneaux vitrés cintrés (6) fixés entre les fermes (54) et les longerons (53), et
- mise en place des panneaux vitrés cintrés mobiles (15) de part et d'autre du longeron de faîtage (55) et solidarisation des dits panneaux vitrés cintrés mobiles avec la partie mobile de charnières fixées au longeron de faîtage (55).

22.- Procédé de montage suivant la revendication 21, caractérisé en ce que les cadres (64) des panneaux vitrés cintrés (6) sont solidarisés entre eux et avec l'ossature (3) par des clips (70) dotés d'ergots élastiques (71) prenant appui dans un sillon (65) ménagé le long de ces cadres (64).

**Patentansprüche**

1. Gewölbtes Glasdach (5), das ein kontinuierliches, sich gemäß einer Längsachse erstreckendes Gewölbe bildet, mit einem Gerippe und einer Folge von gebogenen verglasten Feldern (7), die sich senkrecht zu dieser Achse erstrecken, dadurch gekennzeichnet, daß jedes Feld (7) aus zwei oder mehr nebeneinanderliegenden gewölbten Glaspanelen (6) gebildet ist, von denen jedes dieser Panele (6) eine thermisch vorgespannte rechteckige Glasscheibe (25), die ursprünglich eben war und kalt gewölbt worden ist, und einen gewölbten Rahmen (31) zur Aufrechterhaltung der Krümmung der Glasscheibe (25) unter Vorspannung aufweist, daß der Rahmen (31) durch endseitigen Zusammenbau von entlang der geraden Seiten der Glasscheibe (25) angeordneten geraden Rahmenprofilen (21, 56) und von entlang der gekrümmten Seiten der Glasscheibe (25) angeordneten gewölbten Rahmenprofilen (21, 57) gebildet ist, wobei die Ränder der Glasscheibe (25) in eine Nut (63) eingesetzt sind, die entlang der Innenseite des Rahmens (31) vorgesehen ist, und daß die ein und dasselbe Feld (7) bildenden gewölbten Glaspanele (6) untereinander verbunden sind, indem sie die geraden Rahmenprofile (21, 56) der benachbarten Panele zwischeneinander festlegen, wobei die das Glasdach (5) bildenden aufeinanderfolgende Felder (7) untereinander verbunden sind, indem sie die gewölbten Rahmenprofile (21, 57) der gewölbten Glaspanele (6) zwischeneinander festlegen, welche diese benachbarten Felder (7) bilden.

2. Dach nach Anspruch 1, dadurch gekennzeichnet, daß in der zwei aufeinanderfolgende Felder (7) trennenden Ebene in der Querrichtung ein Untergurt (8) vorgesehen ist, welcher die unteren Ecken gewölbten Glaspanele (6) verbindet, die an den Enden jedes Feldes (7) angeordnet sind.

3. Dach nach Anspruch 2, dadurch gekennzeichnet, daß die Ecken der untereinander verbundenen gewölbten Glaspanele (6) durch Streben (9) mit dem Untergurt (8) verbunden sind, der in der entsprechenden Querebene liegt.

4. Dach nach Anspruch 2, dadurch gekennzeichnet, daß die gewölbten Rahmenprofile (21) mit dem entsprechenden Untergurt (8) durch zwei Streben (59) verbunden sind, die an diesen Profilen (21) zu beiden Seiten der Verbindungsstelle derselben fixiert sind.

5. Dach nach Anspruch 1, dadurch gekennzeichnet, daß das Gerippe Binder (54) aufweist, die aus einem gekrümmten Profilrücken (58) und einem Untergurt (8) zusammengesetzt sind, wobei die Binder (54) senkrecht zur Achse jedes Feldes (7) unter den gewölbten Rahmenprofilen (21, 57) der gewölbten Glaspanele (6) angeordnet sind, welche sie abstützen.

6. Dach nach Anspruch 5, dadurch gekennzeichnet, daß die Binder (54) Streben (9) aufweisen, welche den Untergurt (8) mit dem gekrümmten Profilrücken (58) an der Verbindungsstelle der Ecken der gewölbten Glaspanele (6) verbinden.

7. Dach nach Anspruch 5, dadurch gekennzeichnet, daß ein Aussteifungsprofil (60) den Scheitel des gekrümmten Profilrückens (58) mit jedem Verbindungspunkt zwischen diesem gekrümmten Profilrücken (58) und dem Untergurt (8) verbindet.

8. Dach nach Anspruch 5, dadurch gekennzeichnet, daß der Profilrücken (58) jedes Binders (54) mit dem Untergurt (8) durch Kabel (61) verbunden ist.

9. Dach nach einem der vorhergehenden Ansprüche, dadurch gekennzeichnet, daß die Felder (7) mit ihrer Unterseite auf Längsträgern (12, 53) ruhen, die sich parallel zur Achse des Daches (5) erstrecken.

10. Dach nach Anspruch 9, dadurch gekennzeichnet, daß die Längsträger (12, 53) Hohlprofile sind, die sowohl zur Abstützung als auch als Rinne zum Ableiten von Regenwasser dienen.

11. Dach nach Anspruch 10, dadurch gekennzeichnet, daß der obere Teil der Längsträger (12) eine Vertiefung (26) aufweist, wobei zu beiden Seiten dieser Vertiefung (26) Nuten (27) vorgesehen sind, deren Form den Außenprofil des Rahmens (31) eines gewölbten Glaspanels (6) entspricht, wobei Öffnungen (28), die entlang der unteren Erzeugenden dieser Vertiefung (26) und dieser Nuten (27) ausgebildet sind, diese mit dem Innenraum der Längsträger (12) in Verbindung setzen, so daß der Durchtritt von Oberflächenwasser ermöglicht wird.

12. Dach nach einem der Ansprüche 9 bis 11, dadurch gekennzeichnet, daß es Felder (7) aufweist, die in ihrer Gesamtheit um eine horizontale Achse schwenkbar sind, welche auf einem der beiden Längsträger (12) angeordnet ist, auf denen sich die Felder abstützen, wobei das Schwenken des Feldes (7) um ein Ausstellscharnier (19) erfolgt, dessen feststehender Teil durch eine mit dem Längsträger (12) verbundene zylindrische Rippe (23) gebildet ist, wogegen der mit dem Rahmen des Flügelteiles verbundene bewegliche Teil eine kreisbogenförmig gebogene Lasche (22) aufweist, und wobei dieses Dach (5) mit Mitteln (17) ausgestattet ist, die es ermöglichen, diese schwenkbaren Felder zu betätigen und sie in der Offen- oder Schließstellung zu halten.

13. Dach nach einem der Ansprüche 9 bis 11, dadurch gekennzeichnet, daß es Flügelteile aufweist, von denen jeder durch zumindest ein bewegbares gewölbtes Panel (15) gebildet ist, das über ein oder mehrere Scharniere (35) mit dem Gerippe des Gewächshauses verbunden ist, wobei der untere Rand des Rahmens des Flügelteiles dicht gegen den oberen Rand eines Gerüstteiles liegt, wenn der Flügelteil sich in der Schließstellung befindet, wobei der Flügelteil Mittel (17) aufweist, mit denen er betätigt wird und die ihn in der Offen- oder Schließstellung halten.

14. Dach nach Anspruch 13, dadurch gekennzeichnet, daß die Flügelteile zu beiden Seiten eines Firstträgers (16) angeordnet sind, der ein Element des Gerippes bildet, wobei das Scharnier (35) aus einem feststehenden Teil, der durch eine vom Firstträger (16) getragene zylindrische Rippe (37) gebildet ist, und einem beweglichen Teil geformt ist, der eine zylindrisch gebogene Rinne aufweist, die mit dem Rahmen des Flügelteiles verbunden ist.

15. Dach nach einem der Ansprüche 5 bis 8, dadurch gekennzeichnet, daß die Binder (54) und die Felder (7) mit ihrem tiefsten Punkt auf Längsträgern (53) ruhen, die sich parallel zur Achse des Daches erstrecken, wobei diese Längsträger (53) Hohlprofile sind, die als Rinne zur Abfuhr von Regenwasser dienen, an ihrem oberen Teil eine Vertiefung (26) aufweisen und Seitenflächen haben, welche der Form der Rahmenprofile (56) und der Enden der Profilrücken (58) der Binder (54) angepaßt sind, die auf ihnen aufruhen, daß jeder dieser Binder ferner an einer Backe (73) befestigt ist, die sich unter dem Längsträger (53) erstreckt, wobei ein Spannorgan (74) zwischen den beiden Teilen dieser Backe (73) angeordnet ist und den Binder (54) gegenüber dem Längsträger (53) festlegt, und daß Öffnungen (28), die entlang der unteren Erzeugenden der Vertiefung (26) und der Nuten (79) ausgebildet sind und diese mit dem Innenraum des Längsträgers (53) in Verbindung setzen, so daß das Oberflächenwasser durchtreten kann.

16. Dach nach einem der Ansprüche 9 bis 15, dadurch gekennzeichnet, daß die Längsträger (12, 53) von Säulen (11) getragen sind.

17. Dach nach Anspruch 16, dadurch gekennzeichnet, daß die Säulen (11) hohl sind und zum Abfließen des Regenwassers dienen.

18. Gewächshaus, dadurch gekennzeichnet, daß es ein Dach nach einem der Ansprüche 1 bis 17 und Seitenwände (13) aufweist, die durch ebene Glaspanele gebildet sind, welche durch Profile (14) vom gleichen Typ wie jene Profile (21, 56, 57) eingefaßt sind, die für die Rahmen (31) der das Dach (5) bildenden gewölbten Panele (6) verwendet werden.

19. Gewächshaus nach Anspruch 18, dadurch gekennzeichnet, daß es gewölbte Panele aufweist, die mit einer Überglasung versehen sind, welche aus einer Glasscheibe gebildet ist, die parallel zum Glaspanel durch Rahmenprofile gehalten ist, welche durch elastisches Einrasten in T-förmigen Rinnen (39) festgehalten sind, welche in den Rahmenprofilen der das Gewächshaus bildenden Glaspanele ausgebildet sind.

20. Verfahren zum Montieren eines Daches gemäß einem der Ansprüche 3 und 4, dadurch gekennzeichnet, daß es folgende Schritte umfaßt:

Zusammenbau von gewölbten Glaspanelen (6) auf einem Formstück, wobei jedes dieser Panele (6) eine rechteckige Scheibe (25) aus thermisch vorgespanntem Glas, die ursprünglich eben war und kalt gewölbt worden ist, und einen gewölbten Rahmen (31) aufweist, der befähigt ist, die Krümmung der Glasscheibe (25) unter Vorspannung aufrecht zu erhalten, wobei die Panele (6) gemeinsam ein Feld (7) bilden und untereinander verbunden sind, indem sie die geraden Rahmenprofile (21, 56) der benachbarten gewölbten Glaspanele (6) festlegen,

—Anbringen eines Untergurtes (8), der zwei untere gegenüberliegende Ecken des Feldes (7) verbindet,

—Anbringen von Streben (9), welche den Untergurt (8) mit den angebauten Rahmen der das Feld (7) bildenden gewölbten Glaspanele (6) verbinden,

—Montage eines provisorischen Querriegels (48) auf der gegenüberliegenden Seite des Untergurtes, welcher die beiden anderen unteren Ecken des Feldes (7) verbindet,

—Anheben mittels einer Hebevorrichtung (49) und aufeinanderfolgendes Anordnen jedes der auf diese Weise gebildeten Felder (7) in ihrer Gesamtheit auf Tragelementen oder einem Gerippe (3), und

—Verbinden der Felder (7) untereinander und gegenüber den Tragelementen oder dem Gerippe (3), wobei aufeinanderfolgende, das verglaste Dach (5) bildende Felder (7) untereinander verbunden sind, indem sie die gewölbten Rahmenprofile (21, 57) der gewölbten Panele (6) zwischeneinander festlegen, welche die benachbarten Felder (7) bilden.

21. Verfahren zum Montieren eines Daches nach Anspruch 16 oder 17, dadurch gekennzeichnet, daß es die folgenden Schritte umfaßt:

—Ausbilden von Fundamentlöchern an der Stelle der späteren Säulen (11) des Gerippes,

—Anbringen von Sockeln (51) für die Säulen, die in der Werkstatt vorgefertigt sind und einen Durchmesser entsprechend jenem der Säulen (11) aufweisen,

—Anordnen der Kapitele (52), welche die Säulen (11) abdecken,

—Anordnen der Säulen (11),

—Anbringen der Längsträger (53) auf den entsprechenden Säulen (11) parallel zur Achse der Felder,

—Montage der Binder (54),

—Anordnen der Binder (54) zwischen den Trägern (53) senkrecht zur Achse der Felder,

—Montage eines Firstträgers (55) zwischen den Bindern (54),

—Verbinden der Binder (54) und der Kapitele (52),

—Anbringen und Befestigen der gewölbten Glaspanele (6) zwischen den Bindern (54) und den Trägern (53), und

—Anbringen der beweglichen gewölbten Glaspanele (15) zu beiden Seiten des Längsträgers (55) und Verbinden der beweglichen gewölbten Glaspanele mit dem beweglichen Teil der an dem Firstträger (55) befestigten Scharniere.

22. Verfahren zur Montage nach Anspruch 21, dadurch gekennzeichnet, daß die Rahmen (64) der gewölbten Glaspanele (6) untereinander und mit dem Gerippe (3) durch Clips (70) verbunden sind, die mit elastischen Vorsprüngen (71) versehen ist, welche in eine entlang der Rahmen (64) ausgebildete Rille (65) eingreifen.

## Claims

1. Curved glazed roof (5) forming a continuous arch extending along a longitudinal axis comprising a skeleton and a succession of glazed arched bays (7) extending perpendicularly to the said axis, characterized in that each bay (7) is made up of two or more juxtaposed curved glazed panels (6), each of these panels (6) comprising a rectangular sheet of thermally tempered glass, initially flat and curved when cold (25), and a curved frame (31) suitable for maintaining the stressed curvature of the sheet of glass (25), the said frame (31) being formed by assembling, by their ends, straight framing profiles (21, 56) arranged along the straight sides of the sheet of glass (25) and curved framing profiles (21, 57) arranged along the curved sides of the sheet of glass (25), the edges of the sheet of glass (25) being inserted in a groove (63) running along the inner face of the frame (31), the curved glazed panels (6) forming a single bay (7) being mutually joined by fixing to each other the straight framing profiles (21, 56) of the juxtaposed panels, the successive bays (7) forming the glazed roof (5) being mutually joined by fixing together the curved framing profiles (21, 57) of the curved glazed panels (6) forming these juxtaposed bays (7).

2. Roof according to Claim 1, characterized in that a tie-bar (8) is arranged transversely in the plane separating two successive bays (7) and joins the lower corners of the curved glazed panels (6) arranged at the ends of each bay (7).

3. Roof according to Claim 2, characterized in that the corners of the curved glazed panels (6) which are mutually joined are connected by struts (9) to the tie-bar (8) situated in the corresponding transverse plane.

4. Roof according to Claim 2, characterized in that the curved framing profiles (21) are connected to the corresponding tie-bar (8) by two struts (59) fixed to the said profiles (21) on either side of their junction point.

5. Roof according to Claim 1, characterized in that the skeleton possesses trusses (54) formed by a curved extrados profile (58) and a tie-bar (8), the said trusses (54) being arranged perpendicularly to the axis of each bay (7), below the curved framing profiles (21, 57) of the curved glazed panels (6) which they support.

6. Roof according to Claim 5, characterized in that the trusses (54) possess struts (9) connecting the tie-bar (8) to the curved extrados profile (58), at the junction point of the corners of the curved glazed panels (6).

7. Roof according to Claim 5, characterized in that a stiffening profile (60) joins the apex of the curved extrados profile (58) to each junction point between this curved extrados profile (58) and the tie-bar (8).

8. Roof according to Claim 5, characterized in that the extrados profile (58) of each truss (54) is connected to the tie-bar (8) by cables (61).

9. Roof according to any one of the preceding claims, characterized in that the bays (7) rest by their low points on main beams (12, 53) extending parallel to the axis of the roof (5).

10. Roof according to Claim 9, characterized in that the main beams (12, 53) are hollow profiles simultaneously acting as supports and as gutters for rainwater drainage.

11. Roof according to Claim 10, characterized in that the upper part of the main beams (12) possesses a flared part (26) and, on either side of this flared part (26), notches (27) whose shape corresponds to the outer profile of the frame (31) of a curved glazed panel (6), apertures (28) provided along the lower generating line of this flared part (26) and of these notches (27) putting them in communication with the internal space of the main beam (12), in a manner such as to permit the passage of run-off water.

12. Roof according to any one of Claims 9 to 11, characterized in that it comprises bays (7) pivoting as a whole about a horizontal axis situated on one of the two main beams (12) on which they bear, the pivoting of the bay (7) taking place about a disconnectable hinge (19) whose fixed part is formed by a cylindrical rib (23) fixed to this main beam (12), the mobile part, fixed to the frame of the opening part, possessing an occuate tongue (22), this roof (5) being provided with means (17) suitable for manoeuvring these pivoting bays and retaining them in the open or closed position.

13. Roof according to any one of Claims 9 to 11, characterized in that it possesses opening parts, each opening part being formed by at least one mobile curved glazed panel (15) connected by one or more hinges (35) to the skeleton of the greenhouse, the lower edge of the frame of the said opening part resting in a sealing manner against the upper edge of a part of the skeleton when the opening part is in the closed position, this opening part possessing means (17) suitable for manoeuvring it and for retaining it in the open or closed position.

14. Roof according to Claim 13, characterized in that the opening parts are arranged on either side of a ridge beam (16) which is a constituent part of the skeleton, the hinge (35) being formed by a fixed part composed of a cylindrical rib (37) supported by the ridge beam (16), and by a mobile part which possesses a groove in the form of a cylindrical arc and is fixed to the frame of the opening part.

15. Roof according to any one of Claims 5 to 8, characterized in that the trusses (54) and the bays (7) rest by their low point on main beams (53) extending parallel to the axis of the roof, these main beams (53)

EP 0 282 469 B1

being hollow profiles acting as a gutter for the drainage of rainwater, possessing in their upper part a flared part (26) and having lateral surfaces matched to the shape of the framing profiles (56) and of the ends of the extrados profiles (58) of the trusses (54) which rest thereon, each of the said trusses being, moreover, fixed to a jaw (73) passing under the main beam (53), a clamping member (74) located between the two parts of this jaw (73) ensuring the immobilization of the said truss (54) relative to the said main beam (53), apertures (28) provided along the lower generating line of the flared part (26) and notches (79) putting them in communication with the interior space of the main beam (53) in a manner such as to permit the passage of run-off water.

16. Roof according to any one of Claims 9 to 15, characterized in that the main beams (12, 53) are supported by pillars (11).

17. Roof according to Claim 16, characterized in that the pillars (11) are hollow and serve as downpipes for rainwater.

18. Greenhouse, characterized in that it possesses a roof according to any one of Claims 1 to 17, and lateral walls (13) formed by flat glazed panels framed by profiles (14) of the same type as profiles (21, 56, 57) used for the frames (31) of the curved panels (6) forming the roof (5).

19. Greenhouse according to Claim 18, characterized in that it possesses glazed panels fitted with an over-glazing, the said over-glazing being formed by a sheet of glass retained parallel to the glazed panel by framing profiles fixed by resilient fitting in T-grooves (39) made in the framing profiles of the glazed panels forming the greenhouse.

20. Process for installing a roof according to either of Claims 3 and 4, characterized in that it comprises the following operations:

–assembly to size of curved glazed panels (6), each of these panels (6) possessing a rectangular sheet of thermally tempered glass, initially flat, curved cold (25), and a curved frame (31) suitable for maintaining the stressed curvature of the said sheet of glass (25), the said panels (6) which together form a bay (7) being mutually joined by fixing the straight framing profiles (21, 56) of the juxtaposed curved glazed panels (6),
–fixing a tie-bar (8) mutually connecting two opposite lower corners of the bay (7) thus formed,
–fixing struts (9) connecting the tie-bar (8) to the adjacent frames of the curved glazed panels (6) forming the bay (7),
–installing, on the side opposite the tie-bar, a temporary stay (48) connecting together the other two lower corners of this bay (7),
–raising, by means of a supporting appliance (49), and successive positioning of each of the bays (7) thus produced as a whole on support elements or skeleton elements (3) provided for this purpose, and
–fixing the bays (7) to each other and relative to the support elements or skeleton elements (3), the successive bays (7) which form the glazed roof (5) being mutually joined by fixing together the curved framing profiles (21, 57) of the curved glazed panels (6) forming the juxtaposed bays (7).

21. Process for installing a roof according to either of Claims 16 and 17, characterized in that it comprises the following operations:

–digging foundation holes at the sites of the future pillars (11) of the skeleton,
–positioning of factory-prefabricated pillar bases (51), having a socket of a diameter corresponding to that of the pillars (11),
–positioning of caps (52) topping the pillars (11),
–positioning the columns (11),
–placing the main beams (53) on the corresponding pillars (11), parallel to the axis of the bays,
–installing the trusses (54),
–placing the trusses (54) between the main beams (53), perpendicularly to the axis of the bays,
–installing a ridge beam (55) between the trusses (54),
–fixing the trusses (54) and the caps (52),
–positioning and fixing curved glazed panels (6) fixed between the trusses (54) and the main beams (53), and
–positioning the mobile curved glazed panels (15) on either side of the ridge beam (55) and fixing the said mobile curved glazed panels to the mobile part of hinges fixed to the ridge beam (55).

22. Process of installation according to Claim 21, characterized in that the frames (64) of the curved glazed panels (6) are fixed to each other and to the skeleton (3) by clips (70) provided with flexible lugs (71) resting in a groove (65) made along the frames (64).

14

Fig. 1.

Fig. 2.

Fig. 4.

Fig. 3.

*Fig 5*

*Fig. 9*

Fig. 6.

EP 0 282 469 B1

Fig. 7.

*Fig. 8.*

EP 0 282 469 B1

*Fig. 10.*

EP 0 282 469 B1

Fig. 11.

Fig. 12.

Fig. 13.

*Fig.14.*

EP 0 282 469 B1